# FASCICULE DE BREVET EUROPEEN

(11) **EP 0 369 989 B1**
(45) Date de publication et mention de la délivrance du brevet: **31.08.1994**
(21) Numéro de dépôt: 90100358.2
(22) Date de dépôt: 02.03.1983
(51) Int. Cl.: G11B 7/09, G11B 7/007, G11B 7/095, G11B 7/24, G11B 27/30

(54) **Support d'information mobile prégravé et dispositif optique de suivi de piste mettant en oeuvre un tel support**
Vorgeprägter beweglicher Informationsträger und optische Spurfolgeanordnung dafür
Pre-engraved mobile record carrier and optical tracking device therefor

(30) Priorité: 12.03.1982 FR 8204218
(43) Date de publication de la demande: 23.05.1990
(62) Demande divisionnaire de: 83400427.7
(73) Titulaire: THOMSON-CSF, 75008 Paris (FR)
(72) Inventeur: Gérard, Jean-Louis, F-92045 Paris la Défense (FR); Bricot, Claude, F-92045 Paris la Défense (FR); Berthet, Pierre, F-92045 Paris la Défense (FR)
(74) Mandataire: Ruellan-Lemonnier, Brigitte

(56) Documents cités:
- EP-A- 0 021 411
- EP-A- 0 077 641
- EP-A- 0 077 644
- EP-A- 0 082 716
- EP-A- 0 089 274
- DE-A- 3 131 212
- FR-A- 2 248 568
- FR-A- 2 347 743
- FR-A- 2 366 636
- GB-A- 2 067 313
- US-A- 3 919 697
- PATENT ABSTRACTS OF JAPAN vol. 2, no. 116 () septembre 1978, & JP-A-53 082303 (NIPPON VICTOR K.K.) 20 juillet 1978,

## Description

La présente invention concerne un support d'information mobile en particulier en forme de disque comportant des prégravures matérialisant des pistes le long desquelles des informations lisibles optiquement peuvent être enregistrées. L'invention concerne également un dispositif de suivi radial de ces pistes.

De nombreux procédés de suivi radial de pistes ont été décrits dans l'art connu. Lorsqu'il s'agit d'enregistrer des informations sous forme séquentielle, par exemple des informations vidéo, généralement les pistes ne sont pas matérialisées à l'avance mais plutôt créées en temps réel au moment de l'enregistrement. L'information est enregistrée le long des pistes ayant la forme d'une spirale unique s'étendant de la zone périphérique du disque vers une zone centrale ou l'inverse ou encore ayant la forme de cercles concentriques centrés sur l'axe de rotation du disque.

Dans les systèmes les plus simples, on compte sur la précision des organes d'avance de la tête d'enregistrement pour créer cette piste. Lors de la lecture, des informations enregistrées par exemple sous la forme de micro-reliefs, interfèrent avec un faisceau de lecture focalisé dans le plan de la face d'enregistrement du disque. Le défilement de ces micro-reliefs sous la tâche de focalisation module le faisceau et cette modulation est détectée à l'aide de cellules photoélectriques convertissant les variations d'intensité lumineuse en signaux électriques. Ces signaux électriques peuvent être également utilisés dans un but de suivi de pistes.

Le procédé qui vient d'être décrit nécessite que l'avance de la tête d'enregistrement doit présenter une très grande stabilité mécanique, ce pour éviter que deux sillons successifs ne se chevauchent ou du moins soient mal discernables lors de la lecture. Dans un but d'améliorer le système qui vient d'être décrit, il a été proposé dans la demande de brevet français publiée sous le numéro 2 366 636, un procédé utilisant la dernière piste inscrite ou l'une des pistes précédemment inscrite comme référence. Il est adjoint au système d'avance mécanique de la tête d'enregistrement un système de déflexion optique de la tâche d'enregistrement. La tache de lecture est astreinte à suivre un sillon déjà inscrit de la piste par un asservissement de position classique. A l'aide du système de déflexion optique, la tache d'enregistrement est maintenue à une distance constante, et égale à un multiple entier du pas de la piste, de la tache de lecture.

Il est également connu du document US-A-3 919 697 de réaliser le suivi d'une piste au milieu d'un ensemble d'éléments adjacents déjà enregistrés en subdivisant chaque élément de piste en sites réservés alternativement à l'information et à des motifs spécifiques permettant de contrecarrer toute tendance de la tache d'exploration à s'écarter de sa trajectoire idéale. Ces motifs spécifiques occupent des régions qui ne sont pas en vis à vis des blocs de données et qui sont centrées par rapport à chaque élément de piste. Le recentrage de la tache d'exploration dépend exclusivement des interactions optiques avec les motifs présents sur les éléments de piste qui l'encadrent. La mesure de l'excentrement est indirecte et sensible à la variation du pas de la piste. En outre, si les motifs spécifiques occupent tous les sites réservés à leur intention, le signal indicateur de tendance ne peut être obtenu que si ces motifs forment des groupements distincts, ce qui nécessite une logique de prélèvement à fonctionnement cyclique.

Cependant, lorsque l'on désire enregistrer des informations de façon aléatoire, par exemple dans les applications concernant l'informatique, il n'est plus possible d'utiliser les procédés qui viennent d'être décrits ou des procédés analogues. Il est en général nécessaire de matérialiser à l'avance les pistes devant lesquelles des informations peuvent être enregistrées. Pour ce faire, il est d'usage de créer une prégravure sous quelque forme que ce soit. Dans un exemple de réalisation décrit dans la demande de brevet français publié sous le numéro 2 365 854, lors de la fabrication du support, les pistes sont matérialisées sous la forme d'un sillon lisse créées dans une couche auxilliaire de ce support. Ces pistes peuvent être détectées même en l'absence de tout enregistrement d'information, cet enregistrement étant effectué dans une phase ultérieure dans une couche photosensible ou thermosensible en contact avec la couche auxiliaire.

Dans une variante préférée de l'art connu, les pistes prégravées peuvent être confondues avec les régions dans lesquelles sont enregistrées les informations. On obtient alors un système dit mono-piste.

Il est connu du document GB-A-2 067 313 d'utiliser une première modulation optiquement détectable et périodique pour les éléments réservés à l'information dont la période correspond à une fréquence pour laquelle le spectre d'énergie d'information numériquement codée enregistré montre un zéro de la courbe pour générer un signal d'horloge lors de l'enregistrement et/ou lors de la reproduction et où, pour générer un signal radial de suivi lors de l'enregistrement ou lors de la lecture, une seconde modulation est superposée à la première modulation dans laquelle la position de piste est modulée dans une direction radiale.

Une combinaison spéciale de la modulation périodique de piste est obtenue si la période de la première et de la seconde modulation sont égales avec une relation de phase fixe qui rend une détection synchrone superflue.

Dans d'autres procédés, la piste ou les pistes prégravées sont distinctes des pistes le long desquelles sont enregistrées les informations. On obtient alors des systèmes dits bi-pistes ou multi-pistes. Pour discriminer ces deux types de pistes on peut faire en sorte que la prégravure consiste en un signal décomposable dans un premier spectre de fréquences et l'information décomposable dans un second spectre de fréquences disjoint. Lors de l'écriture, on peut utiliser le faisceau de lecture pour suivre la piste prégravée comme dans la seconde demande de brevet français précitée.

Le principal inconvénient du procédé qui vient d'être décrit est qu'il ne permet pas une densité d'enregistrement maximale puisqu'il nécessite, au minimum, une piste supplémentaire de prégravure pour une piste d'information prégravée. En outre, il nécessite l'utilisation de deux faisceaux, l'un pour le suivi radial de la piste prégravée et l'autre pour l'écriture ou la lecture d'informations sur la piste destinée à l'enregistrement.

Les supports du type dit mono-piste, comportant une prégravure, ne sont pas, non plus exempts d'inconvénients. Ils nécessitent généralement l'utilisation de deux faisceaux, l'un d'enregistrement et l'autre de suivi radial. En outre, si la piste prégravée est facilement discernable du restant du disque (zones interpistes) en l'absence d'enregistrement d'information, il n'en est plus de même lorsque des informations sont enregistrées. Il peut en résulter si des précautions ne sont pas prises, des inversions de contrastes conduisant à des erreurs de suivi.

Il est aussi connu du brevet EP-A-0 077 644, dont le contenu est compris dans l'état de la technique conformément aux articles 54 ( 3 ) et 54 ( 4 ), un support d'information comportant des prégravures avec un premier motif centré de grosseur spécifique permettant sa détection suivi de deux motifs décalés par rapport à l'axe moyen de la piste.

La présente invention propose une structure de support d'informations mobile à prégravure en forme de disque palliant les inconvénients de l'art connu et compatible avec les systèmes monopiste-monofaisceau.

L'invention a donc pour objet un support d'information mobile comportant au moins une face destinée à l'enregistrement, le long de pistes disposées suivant un agencement prédéterminé, d'informations lisibles optiquement, le support étant muni d'une prégravure destinée à être détectée par des moyens optiques de suivi radial desdites pistes d'un dispositif optique de suivi radial de piste comportant en outre au moins une source d'énergie radiante associée à un objectif, pour former sur une surface de référence du disque, au moins une tache d'exploration de piste lorsque le support est mis en mouvement, ladite prégravure étant constituée d'éléments discrets non-contigus matérialisant l'axe moyen desdites pistes formant des zones intercalaires et encadrant des zones destinées à l'enregistrement desdites informations, caractérisé en ce que les éléments discrets comportent au moins un premier motif centré sur l'axe moyen générant la synchronisation et au moins un second motif décalé par rapport à l'axe moyen utilisé pour le suivi de piste, à l'exclusion de motifs centrés de largeur supérieure à la largeur des pistes.

L'invention a encore pour objet un dispositif optique de suivi radial de piste selon la revendication 6 mettant en oeuvre un tel support.

L'invention sera mieux comprise et d'autres caractéristiques apparaîtront à l'aide de la description qui suit en référence aux figures annexées et parmi lesquelles :
- la figure 1 représente un disque de l'art connu et un dispositif de suivi de piste sur un tel disque ;
- les figures 2 à 6 représentent une prégravure de disque selon plusieurs variantes de réalisation conformes à l'invention ;
- les figures 7 à 9 représentent les schémas électriques de dispositifs de suivi de piste selon plusieurs variantes d'exécution conformes à l'invention ;
- les figures 10 et 11 sont des diagrammes explicatifs du fonctionnement du dispositif de l'invention.

L'invention concernant un support d'informations de type prégravé et un dispositif de suivi radial d'une des pistes d'un tel support d'information, il est utile de rappeler les éléments constitutifs principaux d'un système enregistreur et/ou lecteur de supports d'informations, notamment de supports en forme de disques lisibles et inscriptibles optiquement.

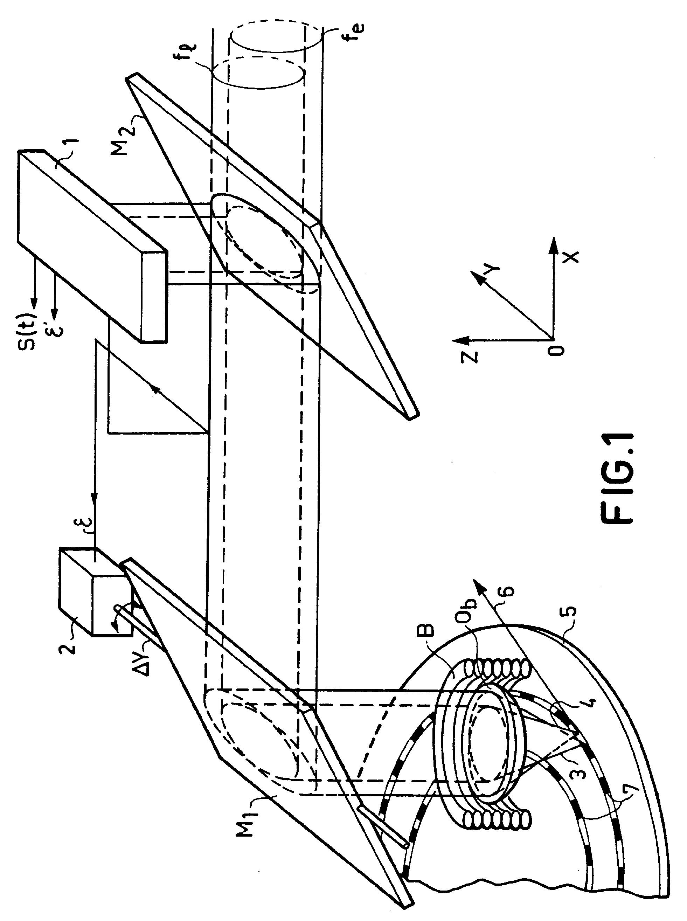

La figure 1 représente un support d'information 5 de l'art connu en forme de disque circulaire pouvant tourner dans un plan XOY autour d'un axe parallèle au troisième axe d'un trièdre de référence XYZ. La face inférieure de ce disque est ici supposée lisse ; la face supérieure qui lui est parallèle est également lisse, mais comporte une piste prégravée 7 sous forme d'une piste lisse dont la largeur sensiblement constante est de l'ordre ou inférieure au micromètre.

On peut utiliser un tel disque, soit pour inscrire des informations en un point déterminé d'une des pistes lisses inscrites au préalable, soit pour lire des informations inscrites en un point quelconque de cette piste. Le disque, par exemple d'un diamètre d'environ 30 cm, est animé d'un mouvement de rotation communiqué par un moteur d'entrainement solidaire du chassis du système optique d'enregistrement-lecture. Dans cet exemple de réalisation, le dispositif d'accès a une piste prédéterminée du disque comprend une partie fixe comprenant deux sources d'énergie lumineuse (non représentées sur la figure 1) et une partie mobile constituée par la tête d'enregistrement-lecture. Comme il est connu, cette dernière comprend un objectif du type microscope O_{b}, solidaire d'une bobine électromagnétique B se déplaçant dans le champ magnétique d'un aimant permanent (non représenté) assurant l'asservissement vertical et un miroir galvanométrique M₁ assurant l'asservissement radial. Les sources d'énergie lumineuse, comme il est également connu, comprennent des sources lasers, par exemple des lasers à gaz He Ne ou semi-conducteurs. Les lasers à gaz délivrent un faisceau parallèle polarisé dont la section est très faible. Le faisceau laser doit être agrandi de façon à recouvrir la pupille d'entrée de l'objectif, ce quelque soit la position de l'objectif le long de l'axe optique. Pour réaliser cette exigence, il a été proposé dans la demande de brevet français FR-A-2 462 758 d'intercaler entre les sources d'énergie lumineuse et la tête d'enregistrement-lecture mobile une optique de type afocal.

Pour la lecture, un faisceau laser f₁ parallèle produit par une source laser (non représentée sur la figure 1), est agrandi à l'aide d'un afocal, dont le grossissement est tel que le faisceau émergeant, également parallèle, recouvre la pupille d'entrée de l'objectif O_{b}. Le miroir M₁ dévie les rayons se propageant parallèlement à une direction parallèle à l'axe OX. L'objectif O_{b} focalise le faisceau de lecture au point 3 sur le disque support d'information 5. Ce disque est animé d'un mouvement de rotation symbolisé par la flèche 6. L'objectif et le miroir sont solidaires d'un équipage mobile constituant la tête d'enregistrement-lecture. L'avance de cet ensemble mobile peut être obtenue par tout moyen connu.

On utilise ensuite le même afocal pour le faisceau d'enregistrement fₑ, lequel ayant été préalablement modulé. Afin de différencier les taches de lecture et d'enregistrement sur le disque, on incline très légèrement le faisceau d'enregistrement fₑ par rapport au faisceau de lecture f₁ de manière à ce que le décentrement du faisceau d'enregistrement sur la pupille d'entrée de l'objectif soit très limité et à ce qu'on puisse négliger le déplacement du faisceau lors d'un déplacement radial de la tête. Il s'ensuit que quelque soit la position de l'objectif le long de l'axe optique, le faisceau d'écriture est focalisé au foyer de l'objectif. La tache d'écriture est focalisée au point 4.

La prégravure de la piste sous la forme d'un sillon "lisse" 7 peut se présenter sous différents aspects. Il peut s'agir par exemple d'une prégravure en creux, selon un ensemble d'éléments de pistes agencés selon des cercles concentriques ou organisés selon d'une spirale. La largeur des éléments de piste est choisie légèrement inférieure au diamètre de la tache lumineuse et ces éléments sont séparés par des plages interpistes dont la largeur est légèrement supérieure à la largeur de la piste. La surface supérieure du support reçoit une couche mince appropriée à l'inscription par un procédé thermooptique. Cette disposition d'éléments permet d'explorer la piste avant inscription, car l'interaction de la tache de lecture avec la piste fournit un rayonnement dispersé, alors que les plages interpistes ne sont pas génératrices de dispersion.

En ce qui concerne la phase d'enregistrement du disque, l'insolation de la couche sensible servant à l'inscription est effectuée par une tache dont l'intensité est modulée par exemple par un signal électrique en créneaux de largeurs variables ou constantes selon les applications qui constituent le support de l'information. L'incorporation de l'information dans le signal modulateur est effectuée selon le cas, par modulation de fréquence ou de phase, ou par tout mode de codage capable de fournir un message codé par impulsions ; l'information peut aussi être elle-même directement le signal modulateur.

Pour détecter les faisceaux de lecture réfléchis par le disque, on interpose, par exemple, une lame semi-transparente M₂ sur le trajet du faisceau f₁. Le faisceau réfléchi est alors envoyé vers des moyens photo-détecteurs et de traitement de signal qui peuvent délivrer d'une part un signal d'erreur ε qui permet de commander le moteur 2 permettant de piloter la position du miroir M₁, en réalisant ainsi un asservissement radial, d'autre part un signal d'erreur ε ′qui permet de commander la bobine B solidaire de l'objectif OB en réalisant ainsi un asservissement de focalisation. Toutes ces techniques bien connues de l'homme de métier et sortent du cadre de l'invention.

Les moyens de traitement peuvent délivrer aussi un signal S(t) représentatif des informations utiles enregistrées sur le disque. En effet lors du défilement des éléments enregistrés sur les pistes 7, on recueille en lecture un signal S(t) qui traduit fidèlement les variations temporelles du signal enregistré sur la piste.

En phase écriture, le faisceau de lecture f₁ est utilisé pour assurer l'asservissement radial à l'aide de la prégravure mais peut également être utilisé dans un but de contrôle en temps réel de l'information en cours d'enregistrement ou "monitoring" selon l'expression anglosaxonne courament utilisée.

Bien que ne nécessitant qu'une surface correspondant à la largeur d'une seule piste, par contraste aux procédés qui mettent en oeuvre une ou deux pistes prégravées adjacentes ou encadrant la piste utile, le procédé de l'art connu qui vient d'être rappelé en relation avec la figure 1, présente cependant des inconvénients.

Tout se passe, du point de vue détection, comme si les pistes étaient plus sombres que les zones interpistes. Tout écart de suivi de piste peut donc être facilement détecté grâce à ce contraste d'amplitude. Lorsque la couche recouvrant le support est soumise au rayonnement inscripteur, les zones inscrites peuvent être éclaircies pour certains matériaux thermosensibles,ce qui contribue à créer un bon contraste le long de la piste. Cependant ces zones éclaircies tendent à se confondre avec la densité plus faible des interpistes avoisinants, ce qui fait perdre radialement le contraste nécessaire pour assurer un bon suivi de piste.

On voit donc que l'inscription nuit au bon repérage radial des pistes dans toutes les zones où la couche a emmagasiné des données.

En outre deux faisceaux différents doivent être mis en oeuvre, au moins pendant les périodes d'inscription : un faisceau d'écriture et un faisceau de lecture et/ou de suivi radial.

L'invention propose un disque optique de type prégravé permettant, entre autres avantages, simultanément, une configuration monopiste et ne nécessitant l'utilisation que d'un seul faisceau, ce sans interférence de la prégravure avec la gravure représentant l'information utile.

Selon la caractéristique principale de l'invention, la prégravure se présente sous la forme d'éléments discrets ou drapeaux qui seuls définissent l'axe moyen de la piste à suivre. Cette piste est donc virtuelle. Compte-tenu de la vitesse de rotation du disque, la répartition spatiale de ces éléments de prégravure doit être suffisante pour satisfaire le critère de SHANNON : typiquement sur un disque de 30 cm de diamètre dont une couronne de largeur 8 cm représente la zone utile d'enregistrement, 40 000 pistes environ sont disponibles et comportent chacune de l'ordre de 3500 drapeaux.

Dans ce qui suit, l'enregistrement de données numériques étant l'application principale envisagée dans le cadre de la présente invention, ce sans être limitatif, il sera décrit un support sur lequel les pistes sont réparties selon des cercles concentriques et équidistants.

L'information utile est enregistrée entre deux drapeaux successifs. Dans ce cadre, si l'on désire une configuration d'enregistrement sous forme de bloc, la répartition spatiale des drapeaux est de façon préférentielle uniforme.

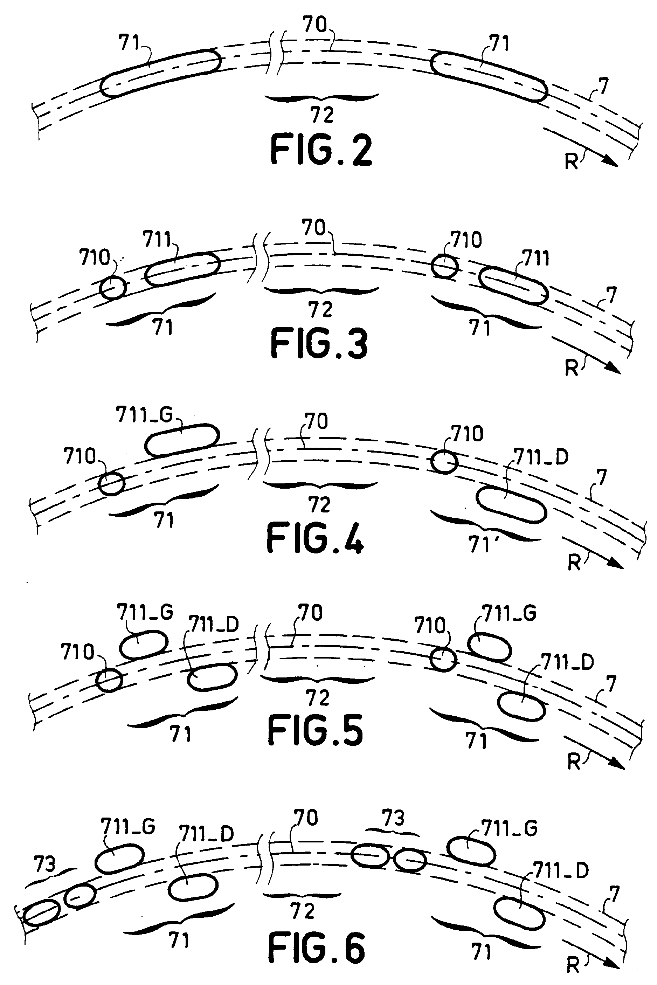

La figure 2 illustre un premier exemple de réalisation de gravure conforme à l'état de la technique. La prégravure se présente sous la forme de tronçons de pistes lisses 71 définissant l'axe moyen 70 de pistes le long desquelles peuvent être enregistrées les informations. Comme il vient d'être rappelé, entre deux drapeaux 71 identiques, il existe une zone vierge toute information 72 avant enregistrement. Le sens de rotation du disque à été représentée sur la figure 2 par la flèche R.

Il doit bien être entendu que la piste 7 représentée sur la figure est une piste virtuelle dont l'axe moyen 70 représente la trajectoire idéale que doit suivre un faisceau d'écriture.

Pour ce faire, les signaux nécessaires à l'asservissement radial de la tête d'écriture seront dérivés de la détection des drapeaux 71 par des moyens de suivi de piste qui seront décrits de façon plus détaillée dans ce qui suit. La tête d'enregistrement peut être une tête analogue à celle illustrée par la figure 1. Lorsque les éléments de prégravure 71 défilent sous la tache de focalisation d'un faisceau de suivi de piste qui peut être le faisceau de lecture ou comme il sera également détaillé ultérieurement, le faisceau d'écriture, un signal de suivi de piste peut être généré de façon classique. A titre d'exemple il peut être utilisé la méthode dite de "push-pull" qui consiste à utiliser deux cellules photodétectrices détectant chacune une fraction du faisceau de suivi de piste, soit après reflexion, soit après transmission au travers du disque. Les deux cellules sont disposées dans l'espace de part et d'autre de l'axe optique du faisceau et les signaux électriques produits par ces deux cellules sont transmis aux entrées d'un amplificateur différentiel qui en effectue la somme algébrique. Lorsque la tâche du faisceau de suivi de piste est centrée sur la piste, le signal en sortie de l'amplificateur est nul. Lorsqu'il y a apparition d'un décentrement, l'amplitude et le signe de ce signal est représentatif du sens et de l'amplitude de ce décentrement. Ce signal est transmis au circuit d'asservissement radial, 2 sur la figure 1.

A la différence des procédés connus, les moyens de traitement des signaux doivent mémoriser la mesure pendant l'interval de temps s'écoulant entre deux passages de drapeaux successifs dans la zone éclairée par la tache de suivi de piste. Selon l'invention, le signal d'asservissement peut être déduit de l'évolution du signal mesuré à ces deux instants.

Il est également nécessaire, si l'on ne désire enregistrer des informations que dans la zone utile 72 localisée entre deux drapeaux 71 successifs, d'inhiber le faisceau d'écriture lorsqu'un de ces drapeaux se trouve dans la zone éclairée par la tâche d'écriture. La discrimination entre les drapeaux et l'information enregistrée entre deux drapeaux peut être facilitée si ces drapeaux sont dotés d'une structure qui permet de les identifier sélectivement.

La figure 3 illustre une telle réalisation. Chaque drapeaux 71 est divisé en plusieurs tronçons 710, 711 dont les longueurs et la répartition spatiale définissent un code qui permet d'identifier un drapeau sans ambiguité.

Pour améliorer la qualité de l'asservissement radial, il est également connu de wobuler le faisceau de suivi en lui imprimant une légère oscillation à fréquence fixe de part et d'autre de l'axe moyen de la piste. Dans une variante préférée de l'invention, on peut créer cette wobulation à l'aide de motifs assymétriques par rapport à l'axe 70 du suivi. Pour ce faire chaque drapeau comporte , outre un ou plusieurs tronçons centrés sur l'axe moyen de la piste et indiquant le début du drapeau, un ou plusieurs autres tronçons décalés par rapport à cet axe moyen.

Dans une première variante, la plus simple, illustrée par la figure 4, un premier drapeau 71 comporte un tronçon 710 centré sur l'axe moyen de la piste 70 et un second tronçon 711-G décalé à gauche de cet axe. Le drapeau suivant 71′ comporte également un premier tronçon 710 centré sur l'axe moyen 70 et un second tronçon 711-D décalé à droite de l'axe. Cette succession est répétée. L'écart entre les tronçons décalés et l'axe 70 de la piste est de l'ordre d'une fraction de la largeur de la tache de suivi.

Dans une seconde variante, chaque drapeau comporte au moins un tronçon décalé à gauche et un tronçon décalé à droite. Cette variante est illustrée par la figure 5. Cette variante présente l'avantage d'offrir une fréquence d'échantillonnage de signal d'erreur de suivi de piste double de la variante précédente. En effet, il n'est pas nécessaire d'attendre le passage de deux drapeaux successifs pour élaborer un signal d'erreur de suivi de piste.

Enfin, il peut être avantageux de combiner les avantages de la structure illustrée par la figure 3 à ceux de la structure illustrée par la figure 5 . Une telle configuration est illustré par la figure 6. On associe au drapeau principal 71, comprenant des tronçons décalés de part et d'autre de l'axe moyen 70 utilisé pour générer un signal d'erreur de suivi radial, un deuxième drapeau 73 utilisé pour générer un signal de synchronisation. De façon préférentielle le drapeau 73 représente un code particulier qui permet de l'identifier sélectivement par rapport aux autres informations enregistrées.

La manière précise dont les informations sont enregistrées sort du cadre de l'invention. Tout procédé connu peut être utilisé. Les drapeaux 71, 71′ et les informations utiles enregistrés dans les zones 72, peuvent pour fixer les idées et sans que cela soit limitatif, être constitués de microreliefs en creux ou en bosse, par exemple par ablation d'une couche superficielle à l'aide du faisceau laser d'écriture. De manière préférentielle, les portions de drapeaux ont tous la même largeur et les portions décalées 711-G et 711-D ont même longueur et même décalage.

Un dispositif de suivi de piste d'un type portant des prégravures conforme à l'invention, c'est-à-dire constituées d'éléments discrets répartis suivant une piste et délimitant des zones utiles destinées à l'enregistrement de données va maintenant être décrit. Le système d'enregistrement-lecture d'informations sur le disque peut être analogue à celui qui a été décrit en relation avec la figure 1. Les éléments identiques ne seront pas décrits à nouveau. Seul le circuit repéré 1, élaborant le signal d'erreur de suivi radial est spécifique.

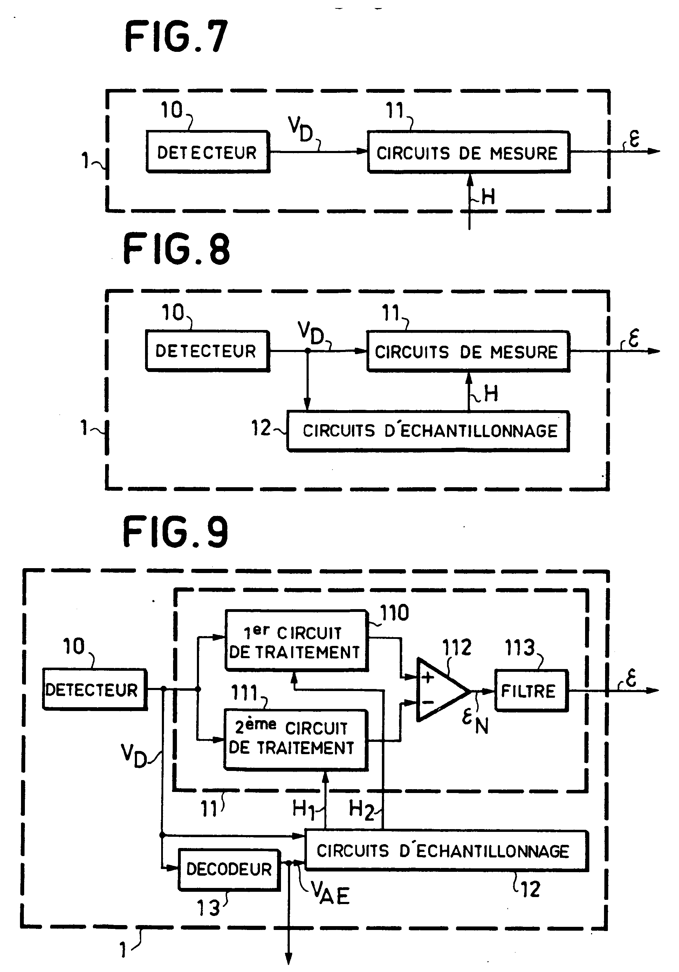

La figure 7 illustre une première variante, simplifiée, d'un tel circuit. Cette variante est plus particulièrement adaptée à des prégravures du type illustré par la figure 2. Il comprend un détecteur photoélectrique 10 et un circuit de mesure 11 élaborant le signal d'erreur de suivi radial ε. Le détecteur 10 peut comprendre deux cellules comme il a été rappelé précédemment. Les signaux de sorties de ces cellules V_{D} sont transmis à des circuits de mesure 11 pouvant comprendre un amplificateur différentiel comme il a été également décrit. Cependant il faut effectuer, selon l'invention, des mesures uniquement pendant les temps de passage des drapeaux dans les zones éclairées par la tache de suivi radial. Si l'enregistrement de données est organisé par bloc, un signal d'horloge H nécessaire à la synchronisation de la mesure peut être déduit de la longueur des blocs et de la vitesse de rotation du disque. Ces impulsions d'horloge peuvent être transmises à une borne d'entrée d'horloge d'un circuit échantillonneur bloqueur recevant sur son entrée le signal produit par l'amplificateur différentiel et générant sur sa sortie un signal ε , mémorisé d'une impulsion à l'autre, représentant l'écart de suivi radial. Ce signal peut être lissé à l'aide d'un filtre passe-bas.

La figure 8 illustre une seconde variante de circuit s'appliquant plus particulièrement à des prégravures du type illustré par la figure 3, c'est-à-dire codées et identifiables par elles-mêmes. Les signaux V_{D} sont transmis à des circuits d'échantillonnage 12 comprenant un décodeur générant un signal de synchronisation H transmis aux circuits de mesure lorsque le code lu correspond au code spécifique des drapeaux. Le signal de synchronisation H autorise la mise en compte de la mesure et la génération d'un signal d'erreur de suivi radial

La figure 9 illustre une troisième variante de dispositif de suivi de piste spécialement adapté aux drapeaux du type comportant des portions décalées par rapport à l'axe moyen des pistes et plus particulièrement à la prégravure du type illustré par la figure 6 comprenant un premier drapeau 73 de synchronisation et un second drapeau utilisé dans un but d'élaboration d'un signal d'erreur de suivi de piste. Les moyens de détection 10 peuvent être constitués dans ce cas par un détecteur unique fournissent des signaux électriques V_{D} d'une part au circuit de mesure 11 et d'autre part à des circuits d'échantillonnage 12 et à un décodeur 13. Ce décodeur détecte sélectivement le passage des drapeaux de synchronisation 73 dans la zone éclairée par la tache de suivi de piste et élabore un signal d'autorisation d'échantillonnage V_{AE} transmis aux circuits d'échantillonnages 12. L'élaboration d'un signal d'erreur de suivi radial peut s'effectuer, selon deux variantes principales, soit par échantillonnage crête ou lorsque les portions décalées sont de mêmes longueurs, par intégration. On associe à la lecture de chacune des marques décalées 711-G et 711-D un circuit de traitement de signal, respectivement 110 et 111. Si on met en oeuvre un procédé par échantillonnage crête, ces circuits peuvent être constitués de circuits du type échantillonneur-bloqueur. Dans le second cas, lorsqu'on met en oeuvre un procédé par intégration, ces circuits peuvent être constitués par un intégrateur associé à un circuit de mémorisation. Comme il est connu, le circuit d'intégration peut être à base d'un intégrateur commandé associé à une mémoire analogique (condensateur par exemple). Les circuits d'échantillonnages 12 dont le fonctionnement est autorisé par le signal de synchronisationn V_{AE} ont pour but d'élaborer des signaux H₁ et H₂ synchronisant la prise en compte des mesures effectuées respectivement sur les portions décalées à gauche et à droite des drapeaux 71. Ces signaux sont transmis au premier et second circuits de traitement 110 et 111. Ces circuits d'échantillonnage reçoivent également les signaux générés par le détecteur 10.

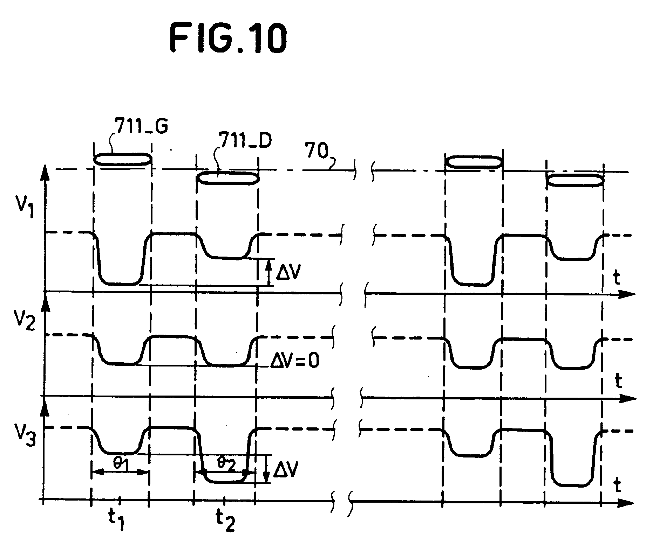

Le diagramme de la figure 10 illustre les trois possibilités caractéristiques de la position de la tache de suivi de piste par rapport à l'axe moyen de la piste 70. Sur la partie supérieure du diagramme, la courbe V₁ illustre le cas où la tache de suivi de piste est décalée à gauche de l'axe moyen de la piste, étant entendu que le sens de rotation est celui indiqué par la flèche R sur la figure 6. Dans ce cas, l'interaction du tronçon 711-G sur le faisceau de suivi de piste est plus importante que celle du tronçon 711-D. La courbe V₁ représente la valeur absolue de l'amplitude du signal électrique fourni par les moyens de détection 10. Le signal V₁ présente une variation d'amplitude plus importante, pendant la fenêtre de temps ϑ₁ qui correspond au passage dans la zone éclairée par la tache de suivi de piste de la portion 711-G, que la variation d'amplitude pendant la fenêtre de temps ϑ₂ qui correspond au passage de la portion 711-D. Les différences d'amplitude et de signe entre ces deux signaux sont représentatives du sens et de l'amplitude du décalage de la tache par rapport à l'axe moyen de la piste. En dehors de ces fenêtres, en l'absence de gravure, le signal fourni par les moyens de détection reste constant.

Dans la partie médiane du diagramme, la courbe V₂ illustre le cas ou la tache de suivi de piste est centré sur l'axe moyen de la piste. Les variations du signal fourni par les moyens de détection 10 dans les fenêtres ϑ₁ et ϑ₂ sont identiques.

Sur la partie inférieure du diagramme, la courbe V₃ représente le cas où la tache de suivi de piste est décalée à droite par rapport à l'axe moyen du suivi de la piste.

Si un procédé d'intégration est mis en oeuvre, les circuits d'échantillonnage élaborent à partir des signaux électriques fournis par les moyens de détection 10 et du signal d'autorisation du décodeur V_{AE} deux impulsions H₁ et H₂ coincident avec les fenêtres de temps ϑ₁ et ϑ₂. Ces deux impulsions autorisent le fonctionnement pendant leurs durées respectives des premier et second intégrateurs 110 et 111.

Si le procédé d'échantillonnage crête est mis en oeuvre, il est alors nécessaire de fournir aux deux circuits échantillonneur-bloqueurs 110 et 111 deux impulsions de brève durée, H₁ et H₂, centrées sur les temps t₁ et t₂ milieu des fenêtres ϑ₁ et ϑ₂. Chaque échantillonneur-bloqueur prends en compte, par exemple sur le front montant de l'impulsion qui lui est transmise, le signal fournit par les moyens de détection 10. La valeur des signaux ainsi échantillonnés est ensuite mémorisé jusqu'à la prochaine mesure. Les sorties des deux circuits de traitement des signaux 110 et 111 sont connectées aux entrées d'un comparateur 112 qui peut être constitué par un amplificateur différentiel et qui fournit sur sa sortie un signal en escalier ε _{N} représentant l'erreur de suivi radial. Pour être réellement exploitable, il est utile de lisser ce signal à l'aide d'un filtre passe-bas 113 dont la sortie fourni l'erreur de suivi radial ε.

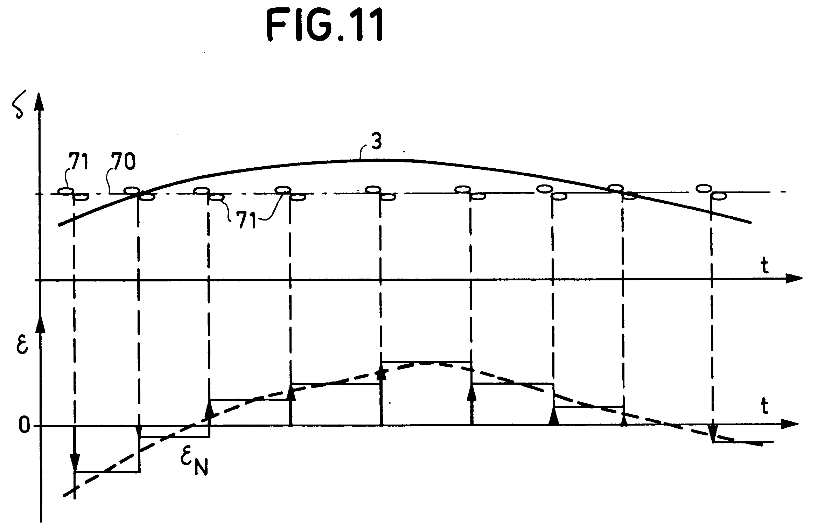

La figure 11 représente un exemple de variation de décalage δ de la tache de suivi radial 3 par rapport à l'axe moyen 70 d'une piste ce en fonction du temps. Sur la partie inférieure du même diagramme, il est représenté la variation correspondante du signal d'erreur ε en fonction du temps par la courbe en pointillés. La variation du signal numérique erreur de suivi radial ε _{N} est également représentée sur ce même diagramme. Ce dernier signal varie au rythme du passage des drapeaux 71 sous la tache de suivi radial et il reste constant entre deux passages successifs.

Dans une variante préférée de l'invention, un seul faisceau est mis en oeuvre. Pour ce faire, pendant les périodes d'enregistrement d'information, le faisceau d'écriture est utilisé séquentiellement comme faisceau de suivi de piste pendant les intervalles de passage de drapeaux 71 dans la zone éclairée par la tache produite par ce faisceau et comme faisceau d'écriture dans les autres intervalles de temps. Pour ce faire, les circuits d'écriture sont inhibés lors du passage des drapeaux. On peut utiliser le signal produit par le décodeur 12 : V_{AE}, éventuellement après inversion logique, pour inhiber les circuits d'écritures. Les circuits d'écriture sont les circuits classiques communs à l'art connu qui ne nécessitent pas de description particulière. Le même faisceau d'écriture est utilisé également pour la lecture. Pour ce faire, on intercale, comme il est connu, un modulateur optique atténuant l'intensité lumineuse de ce faisceau pour un laser à gaz. Dans le cas d'un laser semi-conducteur l'intensité de l'énergie émise est modulable directement par la tension polarisation. Comme précédemment, le signal V_{AE} peut être transmis aux circuits de lecture pour inhiber cette lecture lors du passge des drapeaux.

L'invention présente donc les avantages simultanés des systèmes monopistes, c'est-à-dire un maximum de densité d'enregistrement, compte-tenu que les drapeaux n'occupent qu'une faible surface par rapport à l'information utile, et des systèmes monofaisceaux, c'est-à-dire la simplicité et la réduction du coût.

L'invention n'est pas limitée aux seuls exemples de réalisation qui viennent d'être décrits à titre d'illustration, et notamment aux seules configurations de drapeaux illustrées par les figures 2 à 6.

## Revendications

1. Support d'information mobile (5) comportant au moins une face destinée à l'enregistrement, le long de pistes (7) disposées suivant un agencement prédéterminé, d'informations lisibles optiquement, le support étant muni d'une prégravure destinée à être détectée par des moyens optiques de suivi radial desdites pistes d'un dispositif optique de suivi radial de piste comportant en outre au moins une source d'énergie radiante associée à un objectif (O_{b}), pour former sur une surface de référence du disque, au moins une tache (4) d'exploration de piste lorsque le support est mis en mouvement, ladite prégravure étant constituée d'éléments discrets (71) non-contigus matérialisant l'axe moyen (70) desdites pistes (7) formant des zones intercalaires et encadrant des zones (72) destinées à l'enregistrement desdites informations, caractérisé en ce que les éléments discrets comportent au moins un premier motif centré sur l'axe moyen générant la synchronisation et au moins un second motif décalé par rapport à l'axe moyen utilisé pour le suivi de piste, à l'exclusion de motifs centrés de largeur supérieure à la largeur des pistes.

2. Support selon la revendication 1, caractérisé en ce que les seconds motifs de chaque zone intercalaire sont constitués par un motif (711-G) décalé d'un côté dudit axe moyen (70) de la piste (7) et un motif (711-D) décalé de l'autre côté.

3. Support selon la revendication 1, caractérisé en ce que le second motif (711-G) d'une zone intercalaire est décalé d'un côté dudit axe moyen (70) de la piste (7) et le second motif (711-D) de la zone intercalaire suivante est décalé de l'autre côté dudit axe moyen( 70) de la piste (7), l'ensemble des deux seconds motifs étant utilisé pour le suivi de piste.

4. Support selon l'une quelconque des revendications 1 à 3, caractérisé en ce que le ou les premiers motifs sont disposés pour représenter un code particulier permettant d'identifier la zone.

5. Support selon l'une quelconque des revendications 1 à 3, caractérisé en ce que les premier et second motifs d'une zone intercalaire sont disposés pour représenter un code particulier permettant d'identifier la zone.

6. Dispositif optique de suivi radial de piste utilisable avec un support selon l'une quelconque des revendications 1 à 5, ledit dispositif comprenant des moyens photodétecteurs (10) délivrant en réponse au rayonnement émergeant de la portion de ladite surface de référence éclairée par ladite tache un signal électrique (VD) sensible au déplacement transverse de ladite tache par rapport auxdits éléments de piste et des moyens de mesure (11) des variations, d'une prégravure à la suivante, lesdits moyens de mesure étant sensibles aux valeurs dudit signal prélevées exclusivement au cours de l'exploration desdites zones intercalaires et générant un signal compensateur (ε) destiné à maintenir ladite tache de lecture entre les trajectoires idéales des deux éléments de piste d'encadrement, caractérisé en ce que des moyens de décodage analysent ledit signal électrique afin de générer un signal de synchronisation permettant d'élaborer un signal d'autorisation d'échantillonnage (V_{AE}) transmis aux circuits d'échantillonnages (13) qui délivrent alors après traitement un signal (ε) significatif de l'interaction optique de ladite tache avec un motif de prégravure contribuant à matérialiser l'axe optique moyen de l'élément de piste en cours d'exploration ; ledit signal compensateur changeant de valeur de manière discrète par modification du contenu d'un circuit à mémoire compris dans les moyens de mesure.

7. Dispositif optique selon la revendicatlon 6, caractérisé en ce que ledit signal compensateur (ε) est issu de la comparaison de deux composantes dudit signal électrique (VD), respectivement produites par deux cellules photodétectrices adjacentes appartement auxdits moyens photodétecteurs (10) ; lesdites composantes représentant l'interaction de ladite tache avec un motif de prégravure centré situé dans chacun desdites zones intercalaires (71).

8. Dispositif optique selon la revendicatlon 6, caractérisé enc e que ledit signal compensateur (ε) est issu de la comparaison de deux échantillons provenant d'une même borne de sortie desdits moyens photodétecteurs (10) ; lesdits échantillons représentant les interactions successives de ladite tache avec deux motifs de prégravure présentant des déports égaux et de signes contraires par rapport audit axe moyen ; lesdits motifs en déport étant situés dans lesdites zones intercalaires (71).

## Patentansprüche

1. Beweglicher Informationsträger (5), der auf mindestens einer Seite zur Speicherung von optisch lesbaren Informationen entlang von Spuren (7) bestimmt ist, die gemäß einer vorgegebenen Anordnung verlaufen, wobei der Träger eine Vorprägung besitzt, die von optischen Radialverfolgungsmitteln der Spuren einer optischen Vorrichtung zur Spurradialverfolgung erfaßt werden kann, wobei diese Vorrichtung weiter mindestens eine einem Objektiv (O_{b}) zugeordnete Strahlungsquelle zur Bildung mindestens eines Spurabtastflecks (4) auf einer Bezugsoberfläche der Scheibe besitzt, wenn der Träger in Bewegung versetzt wird, wobei die Vorprägung von diskreten, nicht aneinander anstoßenden Elementen (71) gebildet wird, die die mittlere Achse (70) der Spuren (7) materialisieren und Zwischenzonen bilden, die Zonen (72) zur Informationsspeicherung einrahmen, dadurch gekennzeichnet, daß die diskreten Elemente mindestens ein erstes Motiv, das auf die mittlere Achse zentriert ist und die Synchronisation erzeugt, und mindestens ein zweites Motiv besitzen, das bezüglich der mittleren Achse versetzt ist und zur Spurverfolgung verwendet wird, mit Ausnahme von zentrierten Motiven, die breiter als die Breite der Spuren sind.

2. Träger nach Anspruch 1, dadurch gekennzeichnet, daß die zweiten Motive jeder Zwischenzone aus einem zu einer Seite bezüglich der mittleren Achse (70) der Spur (7) versetzten Motiv (711-G) und einem zur anderen Seite versetzten Motiv (711-D) bestehen.

3. Träger nach Anspruch 1, dadurch gekennzeichnet, daß das zweite Motiv (711-G) einer Zwischenzone zur einen Seite bezüglich der mittleren Achse (70) der Spur (7) und das zweite Motiv (711-D) der nächstfolgenden Zwischenzone zur anderen Seite bezüglich der mittleren Achse (70) der Spur (7) versetzt ist, wobei alle zweiten Motive für die Spurverfolgung verwendet werden.

4. Träger nach einem beliebigen der Ansprüche 1 bis 3, dadurch gekennzeichnet, daß das erste Motiv bzw. die ersten Motive so angeordnet sind, daß sie einen speziellen Kode bilden, mit dem die Zone identifiziert werden kann.

5. Träger nach einem beliebigen der Ansprüche 1 bis 3, dadurch gekennzeichnet, daß die ersten und zweiten Motive einer Zwischenzone so angeordnet sind, daß sie einen besonderen Kode bilden, der die Identifizierung der Zone erlaubt.

6. Optische Vorrichtung zur radialen Spurverfolgung, die auf einen Träger gemäß einem beliebigen der Ansprüche 1 bis 5 anwendbar ist, wobei die Vorrichtung Photodetektormittel (10), die aufgrund der von dem Teil der vom Fleck beleuchteten Bezugsoberfläche ausgehenden Strahlung ein elektrisches Signal (V_{D}) liefern, das auf die Querversetzung des Flecks bezüglich der Spurelemente anspricht, und Mittel (11) zur Messung dieser Veränderungen von einer Vorprägung zur nächsten enthält, wobei die Meßmittel auf die Signalwerte ansprechen, die ausschließlich während der Abtastung der Zwischenzonen erfaßt wurden, und ein Kompensationssignal (ε) erzeugen, das den Lesefleck zwischen den Idealbahnen zweier Spurelemente rechts und links davon halten soll, dadurch gekennzeichnet, daß Dekodiermittel das elektrische Signal analysieren, um ein Synchronisationssignal zu erzeugen, das ein Tastungsfreigabesignal (V_{AE}) erarbeiten kann, das den Tastkreisen (12) übermittelt wird, die dann nach Verarbeitung ein Signal (ε) liefern, das für die optische Wechselwirkung des Flecks mit einem vorgeprägten Motiv kennzeichnend ist, welches zur Materialisierung der mittleren optischen Achse des Spurelements während der Abtastung beiträgt, wobei das Kompensationssignal seinen Wert diskret durch Veränderung des Inhalts eines in den Meßmitteln enthaltenen Speicherkreises verändert.

7. Optische Vorrichtung nach Anspruch 6, dadurch gekennzeichnet, daß das Kompensationssignal (ε) aus einem Vergleich zweier Komponenten des elektrischen Signals (V_{D}) abgeleitet wird, die aus zwei benachbarten und zu den Photodetektormitteln (10) gehörenden Photodetektorzellen erzeugt werden, wobei die Komponenten die Wechselwirkung des Flecks mit einem vorgeprägten Motiv wiedergeben, das in jeder der Zwischenzonen (71) zentriert angeordnet ist.

8. Optische Vorrichtung nach Anspruch 6, dadurch gekennzeichnet, daß das Kompensationssignal (ε) aus dem Vergleich zweier von derselben Ausgangsklemme der Photodetektormittel (10) kommenden Tastproben stammt, die die aufeinanderfolgenden Wechselwirkungen des Flecks mit zwei Vorprägungsmotiven wiedergeben, die gleiche Versetzungen, aber unterschiedlichen Vorzeichens bezüglich der mittleren Achse besitzen, wobei diese versetzten Motive in den Zwischenzonen (71) liegen.

## Claims

1. Movable information carrier (5) comprising at least one face intended for the recording, along tracks (7) arranged in a predetermined arrangement, of optically readable information, the carrier being furnished with pre-engraving intended to be detected by optical means for radially tracking the said tracks of an optical radial-tracking device furthermore including at least one source of radiant energy associated with an objective (O_{b}), in order to form on a reference surface of the disc, at least one track scanning spot (4) when the carrier is set into movement, the said pre-engraving consisting of non-contiguous discrete elements (71) giving physical representation to the mid-line (70) of the said tracks (7) forming intercalary areas and flanking areas (72) intended for the recording of the said information, characterized in that the discrete elements comprise at least one first pattern centred on the mid-line generating the synchronization and at least one second pattern, offset in relation to the mid-line used for the tracking, to the exclusion of centred patterns of width greater than the width of the tracks.

2. Carrier according to Claim 1, characterized in that the second patterns of each intercalary area are constituted by a pattern (711-L) offset on one side of the said mid-line (70) of the track (7) and a pattern (711-R) offset on the other side.

3. Carrier according to Claim 1, characterized in that the second pattern (711-L) of an intercalary area is offset on one side of the said mid-line (70) of the track (7) and the second pattern (711-R) of the next inter-calary area is offset on the other side of the said mid-line (70) of the track (7), the combination of the two seconds patterns being used for the tracking.

4. Carrier according to any one of Claims 1 to 3, characterized in that the first pattern or patterns are arranged so as to represent a particular code enabling the area to be identified.

5. Carrier according to any one of Claims 1 to 3, characterized in that the first and second patterns of an intercalary area are arranged so as to represent a particular code enabling the area to be identified.

6. Optical radial-tracking device which can be used with a carrier according to any one of Claims 1 to 5, the said device including photodetector means (10) delivering, in response to the radiation emerging from that portion of the said reference surface illuminated by the said spot, an electrical signal (V_{D}) sensitive to the transverse shift of the said spot in relation to the said track elements and means (11) for measuring the variations from one pre-engraving to the next, the said measuring means being sensitive to those values of the said signal registered exclusively during the scanning of the said intercalary areas and generating a compensating signal (ε) intended to keep the said read spot between the ideal paths of the two flanking track elements, characterized in that decoding means analyze the said electrical signal so as to generate a synchronization signal making it possible to produce a sampling authorization signal (V_{AE}) transmitted to the sampling circuits (13) which then deliver, after processing, a signal (ε) indicating the optical interaction of the said spot with a pre-engraving pattern contributing to giving physical representation to the optical mid-line of the track element during scanning; the said compensating signal changing value in a discrete manner by altering the contents of a memory circuit included in the measuring means.

7. Optical device according to Claim 6, characterized in that the said compensating signal (ε) arises from comparing two components of the said electrical signal (V_{D}), respectively produced by two adjacent photodetector cells belonging to the said photodetector means (10); the said components representing the interaction of the said spot with a centred pre-engraving pattern located in each of the said intercalary areas (71).

8. Optical device according to Claim 6, characterized in that the said compensating signal (ε) arises from comparing two samples coming from the same output terminal of the said photodetector means (10); the said samples representing the successive interactions of the said spot with two pre-engraving patterns having offsets which are equal and of opposite sign in relation to the said mid-line; the said offset patterns being located in the said intercalary areas (71).
